# EUROPEAN PATENT APPLICATION

(11) **EP 2 184 708 A2**
(43) Date of publication of application: **12.05.2010**
(21) Application number: 07845229.9
(22) Date of filing: 28.08.2007
(51) Int. Cl.: G06Q 20/00

(54) **METHOD AND DEVICE FOR PROCESSING CREDITS TO BE USED BY SUBSCRIBERS OF COMMUNICATIONS NETWORKS**

(71) Applicant: Urbis Telecom Corporation, Road Town, Tortola (VG)
(72) Inventor: AHMEDZADE, Bahram Kamal oglu, Baku 1010 (AZ)
(74) Representative: Sloboshanin, Sergej
(86) International application number: PCT/AZ2007/000006
(87) International publication number: WO 2007/147220

(57) **Abstract**

The invention relates to a method for processing advances/credits to be used by subscribers of communication networks (temporary and permanent provision of air-time advance, as well as such advance for use of additional services available in the network), subscribers of mobile and other communications, including IP-telephony, with the further advance repayment at the moment of balance top-up, or at the moment of payment for communication services in any other way. Said invention allows the large number of subscribers of a communication network to obtain an advance/credit by sending a conditional request, formed by a client (or on behalf of the client), for obtaining of such advance/credit. The request is being inputted by the means of electronic communication device (including mobile phone, ATM, computer and/or any other terminal enabling transmission of a conditional request), and transmitted to at least one server of data processing system for carrying on and processing a transaction and further informing the subscriber about the transaction.

## Description

The invention relates to a method for processing advances/credits to be used by subscribers of communication networks (temporary and permanent provision of air-time advance, as well as such advance for use of additional services available in the network), subscribers of mobile and other communications, including IP-telephony, with the further advance repayment at the moment of balance top-up, or at the moment of payment for communication services in any other way.

The goal of this invention is, among other goals, to increase the satisfaction rate of the subscribers to communication services, by giving them an opportunity to use voice and non-voice services (also in cases of emergency) not depending on whether they have enough lance for such operation, and not depending on whether or not they have a possibility to timely top-up their balance to positive or sufficient for further use of services.

Technically it results in enabling large portion of subscribers with a chance to use obtain an advance/credit after sending a conditional request formed by subscriber (or on behalf of subscriber). The request is being inputted by the means of electronic communication device (including mobile phone, ATM, computer and/or any other terminal enabling transmission of a conditional request), and transmitted to at least one server of data processing system for carrying on and processing a transaction and further informing the subscriber about the transaction.

This invention also helps the communications operator to
- avoid extra expenses while making changes to billing system;
- reach extra revenue per subscriber (ARPU);
- significantly raise loyalty;

The essence of the invention is described in figurative material, whereas:
Fig.1 reflects the process of distribution of advances for subscribers of communication networks in accordance with this invention;
Fig.2 separately reflects the system for processing the requests of subscribers of communication network, under conditions of communication system (Fig.1).
Fig.3 separately reflects the mutual transmission of requests between system for processing the requests of subscribers of communication network (Fig.2) and the operator of communication networks (Fig.1).

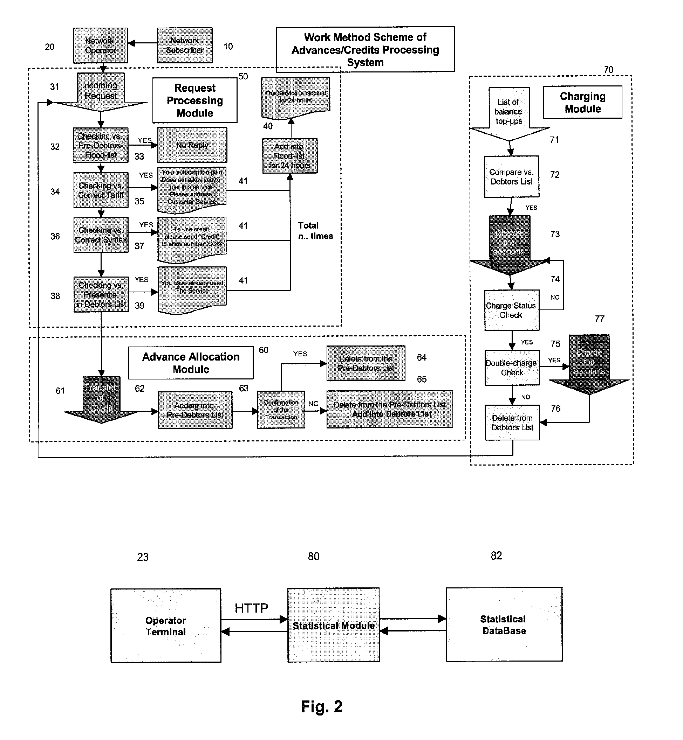

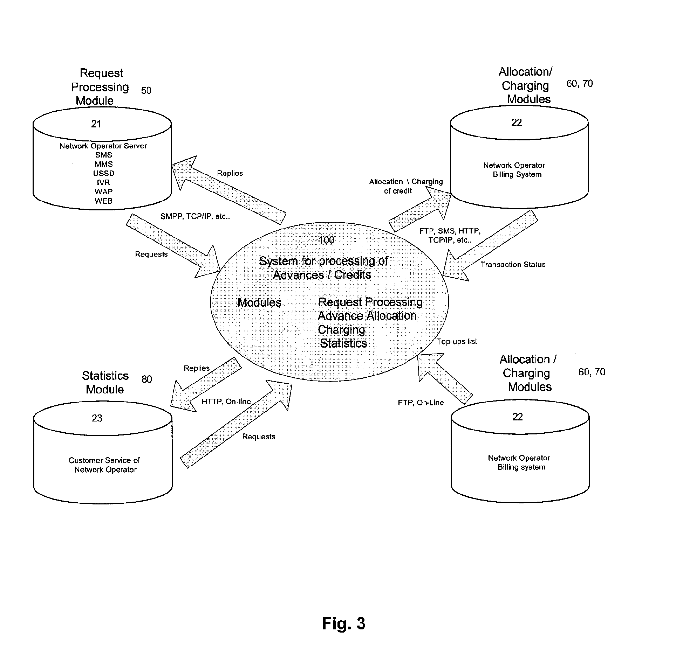

Technical realization of the method and system for processing of advances/credits for use of subscribers of communication networks (hereafter referred to as "System") 100 might be conditionally divided into four programming modules: request processing module 50, advance allocation module 60, charging module 70 and statistical module 80. Each module independently processes the portion of programming code that is proposed for enabling of a separate logical portion of functionality of the whole system. Detailed description of each module (Fig. 2, 3) follows below.

Request Processing Module. The role of the module is to connect the subscriber (using SMPP, TCP/IP and other protocols) to the SMS- (MMS, USSD, IVR, WAP, WEB) -center of the operator, processing of all incoming messages and subscriber credit eligibility check, Fig 3. As soon as the request meaning that the subscriber is willing to get an advance/credit is received a certain history and eligibility checking procedures are started in the database. Such checking may be done in any order, but normally will include: checking vs. black list, checking of the tariff plan of the subscriber, checking of correction of the conditional request, checking to pre-debtor or debtor lists, Fig 2. In case any of the above checking procedures discovers ineligibility of the particular subscriber to receive an advance/credit, the system sends the information with the reasons of declining the request and, after this moment the processing of the particular request is considered finished. Otherwise, the request is transmitted further to the Advance Allocation Module.

Advance Allocation Module. The role of this module is to allocate the certain amount to the balance of the subscriber and to further on check the successful completion of such transaction. Status of the transaction is defined based on the information contained in the operator's billing system, which transmits such information to System server in real-time by technical means of the operator. After receiving of the subscriber's request from Request Processing Module, the agreed amount of advance is being deposited to the subscriber's balance engaging the network operator's billing system (Fig 3) and the subscriber is being added to the pre-debtor list (Fig 2). Further on the Billing system is expected to confirm the completion of transaction. If the transaction is confirmed to be successful, then the subscriber is deleted from pre-debtors list and added to debtors list. Otherwise (if the information about transaction is not received, or if billing system was unable to complete transaction), subscriber is deleted from pre-debtors list. After checking of the transaction status the processing of such particular request is considered completed (Fig 2).

Charging Module. Role of the Charging Module is to process the list of subscribers balance top-up list sent by operator; checking of this list versus the list of debtors of the system and management of charging to subscribers appeared in the intersection/in both of the noted lists. In order to generate such a list the text log is generated by operator and sent to the System server; such log shall contain information about all the balance top-up operations related to the accounts of all subscribers (for the agreed period of time, excluding advance deposit and charging operations) eligible to use the service in accordance with the compatibility of subscriber tariff plans and project's agreed description. Upon receipt of the log, the lists are compared and, in case there are subscribers in the log that exist in the debtors list the charging to their respective accounts balances shall be processed automatically, including charging of the advance amount and the service fees (Fig 2). In case such transaction is confirmed to be successful, the subscriber is deleted from debtors list and, therefore, becomes eligible to use the subsequent credit. Otherwise, i.e. if the automatic advance and fees charging transaction cannot be confirmed as successful, the attempts to process such charging are repeated in the agreed intervals of time until eventual successful completion.

Statistics Module. The role of this module is the formation of real-time reporting about service activity of each subscriber on demand by operator's customer relation department. Technically the functionality of the module is realized by requests from operator's programming systems, with input of the screened subscriber's ID number, and the period of time in which the activity of the subscriber has to be screened. The report is formed based on the information stored in System's unified database and provided immediately on demand (Fig 2 and 3).

In order to facilitate the System functionality the communication network operator shall provide the technical resources/possibilities as follows (Fig 3):
- Provision of real-time channel by means of which the subscriber may communicate to the System (request an advance). This can be done by integration of the System with the various modules of operator's VAS-platform: SMS, MMS, USSD, IVR, WAP, web and similar. The integration of the System with more than one channel (for instance SMS and USSD) is possible. To prevent misuse (potential claims) it is strongly advised to ensure that the sending of request (would it be SMS, MMS, USSD, IVR, WAP, web or similar request) was done via mobile phone of the subscriber.
- Possibility of the System to automatically charge and allocate/deposit the agreed advance to/from the account of subscriber, and obtain confirmation about the success of transaction. This possibility is facilitated by a mechanism of request processing between System and operator's billing system. This mechanism might be enabled by MT-SMS Charging, Charging Gateway (Diameter or alike), direct request processing between System and operators billing system (for instance using HTTP protocol) or by any other means that may enable the fixed amount billing transactions with the subscriber's account.
- Informing the System about subscriber account balances top-ups that may occur outside the billing activity of the System. Such information might be provided by technical means of operator both real-time or periodically (daily, hourly, etc.). Technically informing may be provided by operator downloading of the log/text files to the FTP-server (if the process is periodical) or by conditional HTTP-requesting of the information (if the process is arranged in real-time).

The preferable option of implementation of this invention is described below with reference to the attached schemes. In the description below the commonly known functions and structures were not described separately because there is no need to go into unnecessary details in order to understand the invention. Specifically this relates to details (structure of the request sent, method of sending, methods of connection to the billing system and other systems of the network operator, software environment, etc.) described only in general in order to give the clearer vision about the invention. However, the industry specialists will understand that implementation of invention can be done without these details or with modifications to these details, and that it does not conflict with the core invention.

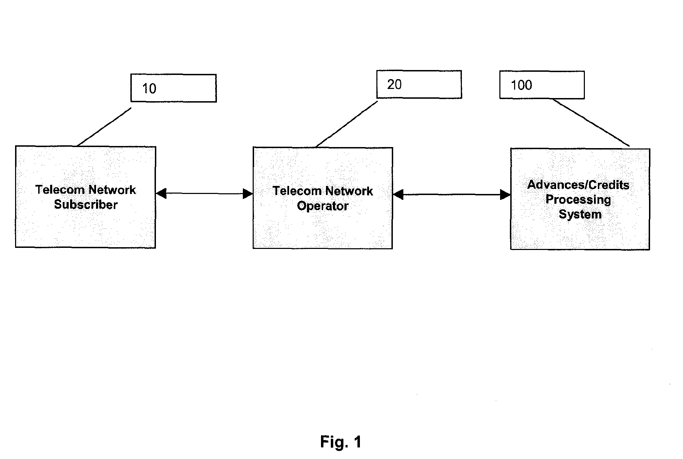

Method and system, described in Fig 1, 2 and 3, is intended to be used within the operating system. Processing and statistical data of all the modules of the system are stored in the unified data-base 82. System consists of four programming modules: Request Processing Module (RPM) 50, Allocation Module (AM) 60, Charging Module (CM) 70, Statistics Module (SM) 80. System 100 is connected to the Network Operator's Servers (NO) 20: SMS-Center 21, Billing System (BS) 22, Customer Service (CS) 23, as shown in Fig 3, by means of appropriate connection protocols: SMPP, FTP, HTTP. Mode of connection: System server may be either installed within operators' network or connected from outside via VPN.

Fig 2 and Fig 3 show the flow-chart that reflects the implementation of the system processes, where Network's Subscriber (NS) 10 willing to obtain an advance sends short text message (SMS) 31 via NO network 20. Such SMS request shall contain the agreed code word, i.e. "credit". The request 31 passes via SMS-Center 31 of the NO (Fig 3) and reaches the RPM 50 (Fig 2 and Fig 3) of the System 100. RPM 50 processes all SMS incoming via short number XXXX specially dedicated by NO 20, and also processes the subscriber's credit eligibility check. After receiving of the request 31 NS history checking procedures are applied within database 82, in the steps as follows:
- Checking vs. Pre-Debtors Flood-list 32. (If NS 10 is found in this list, no further action is taken 33, and the request processing transaction is considered complete. Otherwise, the request is forwarded to the Correct Tariff Module 34).
- Checking vs. Correct Tariff (or NS 10 eligibility check) 34. (If due to his/her subscription plan the customer is not eligible to use the service, then NS 10 receives a short message 35 via NO's SMS-Center 21 with the text, i.e. "Your subscription plan does not allow you to use this service. Please address Customer service" and the request processing transaction is considered complete. Otherwise, the request is forwarded to the Syntax Checking Module 36)
- Checking vs. correct syntax 36 is provided to maximize protection of NS or NO against unauthorized or undesirable use of service on behalf of NS. If the syntax is not correct NS receives the related text message (SMS) 37 via short number XXXX of SMS-Center 21 of NO 20, i.e. "To use credit please send "Credit" to short number XXXX". After this the processing of this request is considered complete. Otherwise, the request is forwarded to checking module in debtors list 38.
- Checking vs. presence of NS 10 in Debtors List 38 means checking if the NS has unpaid advances/credits. If the NS 10 identified in this list, then he receives the related text message (SMS) 39 via short number XXXX of SMS-Center 21 of NO 20, i.e. "You have already used the service". After this the processing of this request is considered complete. Otherwise the request is forwarded to Advance Allocation Module 60.

NS 10 may send a limited number of requests 31 (for instance 3 requests) to the short number XXXX of SMS-Center 21 of NO 20. This limitation is set in order to prevent the System 100 from traffic overload in case of large quantity of incorrect requests. In case NS 10 exceeds the limit, he/she is added into Flood-List 41 for a certain preset period of time, i.e. 24 hours. In the same time NS receives the related text message (SMS) 40 via short number XXXX of SMS-Center 21 of NO 20, i.e. "The service is blocked for 24 hours".

Task of AAM 60 is to deposit advance amount to the balance of NS 10, and to check the success of this transaction. The status of transaction is detected based on the information contained in the files generated by BS 22 of NO 20 and sent in real-time to the FTP-server of the System 100. Deposit into the balance of NS 10 is done immediately upon receiving of the information about request 31 of NS 10 from RPM 50. In the same time the NS 10 is added into the Pre-Debtors List 62. Then a certain period of time (for instance 5 hours) is allowed for confirmation of the transaction 63. In case of transaction success the NS 10 is deleted from Pre-Debtors List 62 and added into Debtors List 65. Otherwise the NS 10 is deleted from Pre-Debtors List 64. When the transaction success check is done processing of this request is considered completed.

Task of CM 70 is to receive the List 71 of NS 10 that made a balance top-up (periodically, i.e. once a day, or instantly) from NO 20; to compare 72 this list with the list of current debtors of the System 100; to charge 73 the accounts of NS 10 that are found in both of the lists. NO 20 generates the List 71 in accordance with the agreed conditions and uploads the List 71 to the FTP-Server of the System 100. This List 71 shall contain the information about all the balance top ups for the agreed period of time, exclusive of information related to advance allocation and/or charging from the accounts of NS 10, if these NS 10 belong to tariff plans eligible to the service in accordance with project description. After uploading to the FTP-server the list is being processed 72 by System 100, and if the NS 10 from Debtors List is identified in the list, the operation 72 shall be used by BS 22 to automatically charge back the advance amount and service fee from the balance of such NS 10 account.

If the transaction 74 was successful, then NS 10 is deleted 76 from Debtors List and gains the right to use the service again. Otherwise System 100 retries operation 73 again periodically, i.e. in 10 hours period. The periodic retry is done until the charging operation is successfully completed. (If for some reasons the operation 73 is done two times, i.e. advance amount and/or service fee are double-charged 75, then the reverse operation 77 is done to return the amount of mistakenly charged balance to the account of NS 10.

Task of SM 80 is to form of real-time reporting about activity of any NS 10 on demand by CR Personnel 23 of NO 20. Technically the functionality of the module is realized by HTTP-requests from programming systems of NO 20, with input of the screened NS' 10 ID number, and the period of time in which the activity of such NS 10 to be screened. The report is formed based on the information stored in System's 100 unified database 82 and provided immediately on demand. The request-answer model is realized via HTTP-protocol, which noticeably simplifies the integration and interactivity with software used by CR Personnel 23 of NO 20.

The abovementioned method of advance processing for use by subscribers of communication networks is currently successfully implemented and works in Azerbaijan and Georgia. While the invention has been particularly shown and described with reference to several preferred embodiments thereof, it will be understood by those skilled in the art that various changes in form and detail may be made without departing from the spirit or scope of the invention. The scope of invention is described in following formula, not the above implemented models.

## Claims

1. Method of processing advances/credits to be used by subscribers of communication networks comprising of:
receiving the conditional advance/credit request by automatic system via communication network, using the computing devices;
processing an automatic checking of advance/credit eligibility; processing of the data related to particular client's account balance in order to make an automatic decision on whether or not to give him an advance/credit;
depositing of advance/credit amount to the client's account balance by means of system connected to billing system of network operator;
informing the client about advance allocation to his/her account balance;
automatically charging back the advance/credit amount and service fee amount by means of system connected to billing system of network operator after depositing additional amounts to
the client's balance;
protecting against unwanted use of advance/credit.

2. The method according to claim 1, wherein the advance/credit request is received by SMS (Short Message Service) and/or USSD (Unstructured Supplementary Services Data) and/or IVR (Interactive Voice Response) and/or WAP (Wireless Application Protocol) and/or WEB-site and/or MMS (Multimedia Message Service).

3. Automatic system for advance/credit processing comprising of:
conjunction element for connecting to network operator and network operator systems;
computer memory for storage of code segments and advance/credit balances database;
inputting device for sending of conditional request via communication network and network operator's systems;
processor for processing of code segment combinations and enabling access to database for confirmation of advance/credit request;
transmission device for depositing of the advance/credit amount to the balance and charging back the amount of advance/credit and service fees from the balance if the agreed conditions occur.

4. The system according to claim 3, wherein segment code combinations comprise of:
Segment of code enabling receiving of the advance/credit request from client via communication network;
Segment of code enabling approval of the advance/credit request;
Segment of code enabling depositing of advance/credit amount to the balance by means of automatic system connected to the billing system of communication network;
Segment of code enabling charging of advance/credit amount and service fee from the balance by means of automatic system connected to the billing system of communication network;
Segment of code enabling conditional automatic protection against receiving unwanted advance/credit.

5. System according to claims 3 and 4, wherein including one or some of as follows:
WEB, WAP, SMS, MMS, USSD and/or IVR servers providing receiving of conditional advance/credit requests via communication network.

6. System according to claims 3-5, wherein including the means for statistics processing in order to enable allocation of different advance/credit amounts to the same end user.

7. System according to claims 3-6, wherein including the means of creation of subscriber "black lists".

8. System according to claims 3-7, wherein including the on-subscriber's-demand solution enabling automatic inclusion/exclusion of subscribers into/from various subscriber groups with different levels of advance/credit eligibility.

9. System according to claims 3-8, wherein including the means of providing full statistical, current status or archive information.

10. System according to claims 3-10, wherein including the possibility of flexible processing of data for disposal by operator's customer service/call center.
